# EUROPÄISCHE PATENTSCHRIFT

(11) **EP 2 804 802 B1**
(45) Veröffentlichungstag und Bekanntmachung des Hinweises auf die Patenterteilung: **04.01.2017**
(21) Anmeldenummer: 12794243.1
(22) Anmeldetag: 21.11.2012
(51) Int. Cl.: B62D 5/04, B62D 7/14

(54) **LENKUNGSZENTRIERUNG**
STEERING CENTERING
CENTRAGE DE DIRECTION

(30) Priorität: 17.01.2012 DE 102012100343
(43) Veröffentlichungstag der Anmeldung: 26.11.2014
(73) Patentinhaber: Robert Bosch Automotive Steering GmbH, 73527 Schwäbisch Gmünd (DE)
(72) Erfinder: HÄGELE, Michael, 73432 Aalen (DE); HÄUßLER, Stefan, 73575 Leinzell (DE)
(86) Internationale Anmeldenummer: PCT/EP2012/073159
(87) Internationale Veröffentlichungsnummer: WO 2013/107540

(56) Entgegenhaltungen:
- EP-A1- 0 420 131
- DE-A1- 4 111 799

## Beschreibung

### GEBIET DER ERFINDUNG

Die vorliegende Erfindung betrifft ein Lenksystem für ein Fahrzeug und ein Verfahren zur selbsttätigen Rückstellung eines Lenksystems mit Lenkunterstützung.

### HINTERGRUND DER ERFINDUNG

Im Stand der Technik sind Lenksysteme bekannt, die eine selbsttätige Rückstellung/Mittenzentrierung bewirken. Rückstellung bedeutet, dass die Räder in Geradeausrichtung ausgerichtet werden. Eine selbsttätige/automatische Rückstellung meint, dass die Geradeausrichtung erfolgt, sobald der Fahrer das Lenkrad loslässt.

Ein solches System ist gemäß Oberbegriff des Einspruchs 1 aus EP 0 420 131 A1 bekannt.

### ZUSAMMENFASSUNG DER ERFINDUNG

Eine selbsttätige Rückstellung wird beispielsweise vom deutschen Gesetzgeber gefordert. Bei einer Servolenkung mit Elektromotor besteht die Schwierigkeit, dass die Reibung durch den Elektromotor so hoch sein kann, dass allein durch die sich aufgrund der Radkräfte der Lenkkinematik einstellenden Rückstellkräfte keine selbsttätige Rückstellung bei Ausfall der Lenkunterstützung durch den Elektromotor sichergestellt ist. Es ist daher bei einer Servolenkung eine zusätzliche Einheit erforderlich, die eine selbsttätige Rückstellung garantiert. Eine derartige Einheit sollte jedoch in ihrer Bauweise möglichst kompakt ausgeführt sein, um die räumlichen Abmessungen des Lenksystems insgesamt begrenzt halten zu können. Außerdem sollte die zusätzliche Einheit möglichst wenig Wartung erfordern und keine Geräuschentwicklung innerhalb des Fahrzeugs hervorrufen.

Eine Aufgabe ist daher, ein Lenksystem mit Lenkunterstützung durch einen Elektromotor zur Verfügung zu stellen, das eine selbsttätige Rückstellung sicherstellt und dabei eine kompakte Bauweise realisiert, möglichst wartungsarm ist und keine zusätzliche Geräuschquelle im betreffenden Fahrzeug darstellt.

Als erste Ausführungsform der Erfindung wird ein Lenksystem für ein Fahrzeug zur Verfügung gestellt, umfassend: einen Elektromotor zur Lenkunterstützung, ein Lenkungsgehäuse zur Aufnahme eines Teils des Lenksystems, ein Element zum Führen einer Spurstange mit einer Längsachse und einen Mitnehmer, der mit dem Element verbunden ist, wobei zwischen dem Lenkungsgehäuse und dem Mitnehmer ein pneumatischer und/oder hydraulischer Zylinder zur Erzeugung einer Rückstellkraft für das Element angeordnet ist.

Durch die Anordnung eines pneumatischen oder hydraulischen Zylinders zur Rückstellung in beide Richtungen entlang der Längsachse des Elements zum Führen der Spurstange kann eine sehr kompakte Bauform erzielt werden.

Als zweite Ausführungsform der Erfindung wird ein Verfahren zur selbsttätigen Rückstellung eines Lenksystems mit Lenkunterstützung zur Verfügung gestellt, umfassend den Schritt: Bewegen eines Elements zum Führen einer Spurstange des Lenksystems in eine erste Richtung der Längsachse, wobei dadurch ein Mitnehmer in die erste Richtung bewegt wird, wobei das Lenksystem einen Zylinder mit einem ersten Kolben und einem zweiten Kolben umfasst, wobei eine erste Wand des Zylinders ein Teil einer Innenwandung des Lenkungsgehäuses ist und eine zweite Wand des Zylinders ein Teil einer Außenwandung des Mitnehmers ist.

Beispielhafte Ausführungsformen werden in den abhängigen Ansprüchen beschrieben.

Gemäß einer beispielhaften Ausführungsform der Erfindung wird ein Lenksystem zur Verfügung gestellt, wobei ein Teil einer Innenwand des Lenkungsgehäuses und ein Teil einer Außenwand des Mitnehmers eine erste und eine zweite Wand des Zylinders ausbilden.

Durch die Ausformung des Zylinders mit Außenwänden als Teil des Lenkungsgehäuses und als Teil des Mitnehmers wird eine einfache Bauweise des Zylinders erreicht.

In einer weiteren erfindungsgemäßen Ausführungsform wird ein Lenksystem zur Verfügung gestellt, wobei das Lenksystem einen ersten Kolben und einen zweiten Kolben aufweist, die eine dritte und eine vierte Wand des Zylinders ausbilden, wobei der erste Kolben und/oder der zweite Kolben in Richtung der Längsachse in zumindest einer ersten und/oder einer zweiten Richtung beweglich sind.

Gemäß einem weiteren Ausführungsbeispiel der vorliegenden Erfindung wird ein Lenksystem zur Verfügung gestellt, wobei bei einer Bewegung des Elements in die erste Richtung der Längsachse der Mitnehmer in die erste Richtung bewegt wird und wobei bei einer Bewegung des Elements in die entgegen gesetzte Richtung zur ersten Richtung der Mitnehmer auch in die entgegen gesetzte Richtung bewegt wird.

Gemäß einer beispielhaften Ausführungsform der Erfindung wird ein Lenksystem zur Verfügung gestellt, wobei bei einer Bewegung des Mitnehmers in die erste Richtung der erste Kolben in die erste Richtung bewegt wird und der zweite Kolben ortsfest ist und wobei bei einer Bewegung des Mitnehmers in die entgegen gesetzte Richtung der zweite Kolben in die entgegen gesetzte Richtung bewegt wird und der erste Kolben ortsfest ist.

In einer weiteren erfindungsgemäßen Ausführungsform wird ein Lenksystem zur Verfügung gestellt, wobei der Mitnehmer durch zwei Sicherungsringe mit dem Element verbunden ist.

Durch die Anordnung von Sicherungsringen zur Verbindung des Mitnehmers mit dem Element, beispielsweise eine Zahnstange, kann ein radialer Abstand zwischen Mitnehmer und dem Element vorgesehen werden, wodurch eine Verklemmung bei einer Durchbiegung des Elements verhindert werden kann.

Gemäß der vorliegenden Erfindung wird ein Lenksystem zur Verfügung gestellt, wobei das Element eine Zahnstange, oder eine Kolbenstange ist.

In einer weiteren erfindungsgemäßen Ausführungsform wird ein Lenksystem zur Verfügung gestellt, wobei der Zylinder innerhalb des Lenkungsgehäuses angeordnet ist.

Gemäß einem weiteren Ausführungsbeispiel der vorliegenden Erfindung wird ein Lenksystem zur Verfügung gestellt, wobei das Element durch ein erstes und ein zweites Lager gelagert ist und wobei der Zylinder zwischen dem ersten und dem zweiten Lager angeordnet ist.

Eine Ausführung eines Lenksystems mit einer Rückstellvorrichtung, die innerhalb des Lenkungsgehäuses bzw. zwischen den beiden Lagern des Elements, respektive der Zahnstange, angeordnet ist, führt zu einer besonders kompakt ausgebildeten Bauweise.

Gemäß einer beispielhaften Ausführungsform der Erfindung wird ein Verfahren zur Verfügung gestellt, umfassend den Schritt: Bewegen des Elements in die entgegen gesetzte Richtung zur ersten Richtung, wodurch der Mitnehmer auch in die entgegen gesetzte Richtung bewegt wird.

Gemäß einer beispielhaften Ausführungsform der Erfindung wird ein Verfahren zur Verfügung gestellt, umfassend den Schritt: Bewegen des Mitnehmers in die erste Richtung, wodurch der erste Kolben in die erste Richtung bewegt wird und der zweite Kolben ortsfest ist.

Gemäß einer beispielhaften Ausführungsform der Erfindung wird ein Verfahren zur Verfügung gestellt, umfassend den Schritt: Bewegen des Mitnehmers in die entgegen gesetzte Richtung, wodurch der zweite Kolben auch in die entgegen gesetzte Richtung bewegt wird und der erste Kolben ortsfest ist.

Als eine Idee der Erfindung kann angesehen werden, eine Servolenkung bereit zu stellen, die durch einen pneumatischen und/oder hydraulischen Zylinder eine selbsttätige Rückstellung/Mittenzentrierung sicherstellt. Die Wände des Zylinders werden dabei durch einen zylinderförmigen Mitnehmer und ein Lenkungsgehäuse gebildet, wobei der Mitnehmer mit einer Zahnstange zum Führen mindestens einer Spurstange des Lenksystems verbunden ist. Hierdurch kann eine kompakte Bauweise erzielt werden, da die Vorrichtung zur Rückstellung innerhalb des Lenkungsgehäuses angeordnet ist. Außerdem ist ein pneumatischer bzw. hydraulischer Zylinder wartungsarm und erzeugt nahezu keine Geräusche im Betrieb.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Fig. 1: einen Längsschnitt durch ein Lenkungsgehäuse,
- Fig. 2: einen Längsschnitt durch dasselbe Lenkungsgehäuse,
- Fig. 3: einen Längsschnitt durch ein zweites Lenkungsgehäuse,
- Fig. 4: einen Längsschnitt durch das zweite Lenkungsgehäuse.

### DETAILLIERTE BESCHREIBUNG BEISPIELHAFTER AUSFÜHRUNGSFORMEN

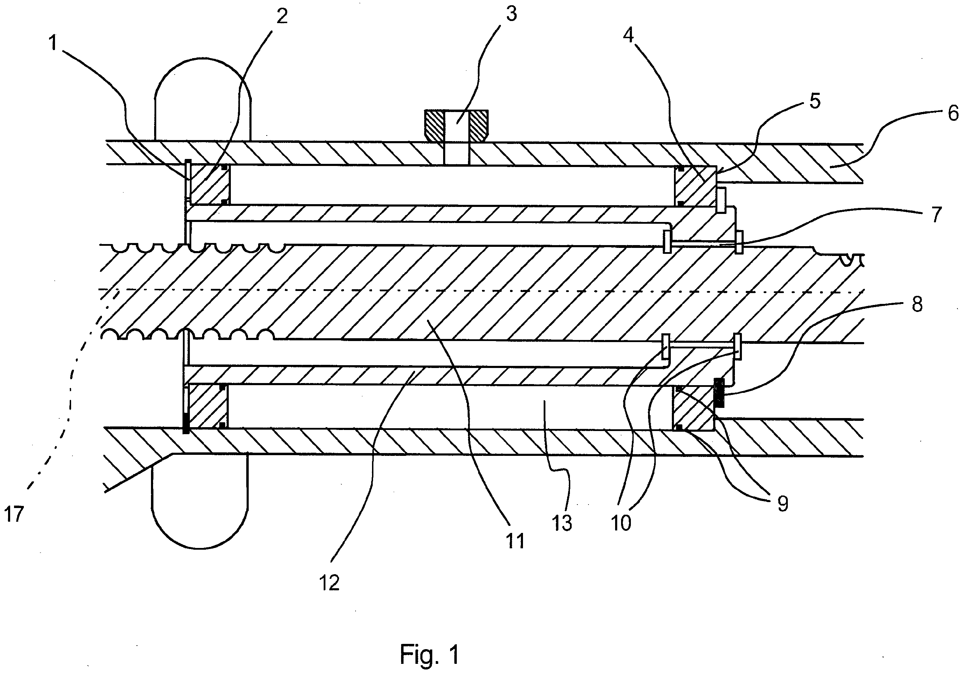

Fig. 1 zeigt einen Längsschnitt durch einen Teil eines Lenksystems für ein Fahrzeug mit einem Lenkungsgehäuse 6, wobei innerhalb des Lenkungsgehäuses 6 eine selbsttätige Rückstellungsvorrichtung angeordnet ist. Eine Zahnstange 11 des Lenksystems ist mit einem Mitnehmer 12 verbunden, wodurch bei einer axialen Verschiebung der Zahnstange 11, also einer Verschiebung entlang der Längsachse 17, der Mitnehmer 12 mitgeführt wird. Der Mitnehmer 12 ist durch Sicherungsringe 10 an der Zahnstange 11 angeordnet. Der Mitnehmer 12 kann zylinderförmig ausgebildet sein, wodurch sich ein Zylinder 13 zwischen der Außenfläche des Mitnehmers 12 und dem Lenkungsgehäuse 6 ergibt. An den beiden Enden des Zylinders 13 sind Kolben 2, 4 angeordnet, wodurch sich ein abgeschlossenes Volumen des Zylinders 13 ergibt. Die Kolben 2, 4 weisen Dichtungen 9 auf, die als Dichtringe ausgebildet sein können, damit der Zylinder 13 auch bei hohen Drücken dicht bleibt. Insgesamt ergibt sich derart ein pneumatischer oder hydraulischer Zylinder 13 zur Rückführung bei axialer Auslenkung der Zahnstange 11. Fig. 1 zeigt das Lenksystem in einer Grundstellung, bei der eine Mittenzentrierung vorliegt, weswegen die Räder des entsprechenden Fahrzeugs in Geradeausrichtung ausgerichtet sein sollten.

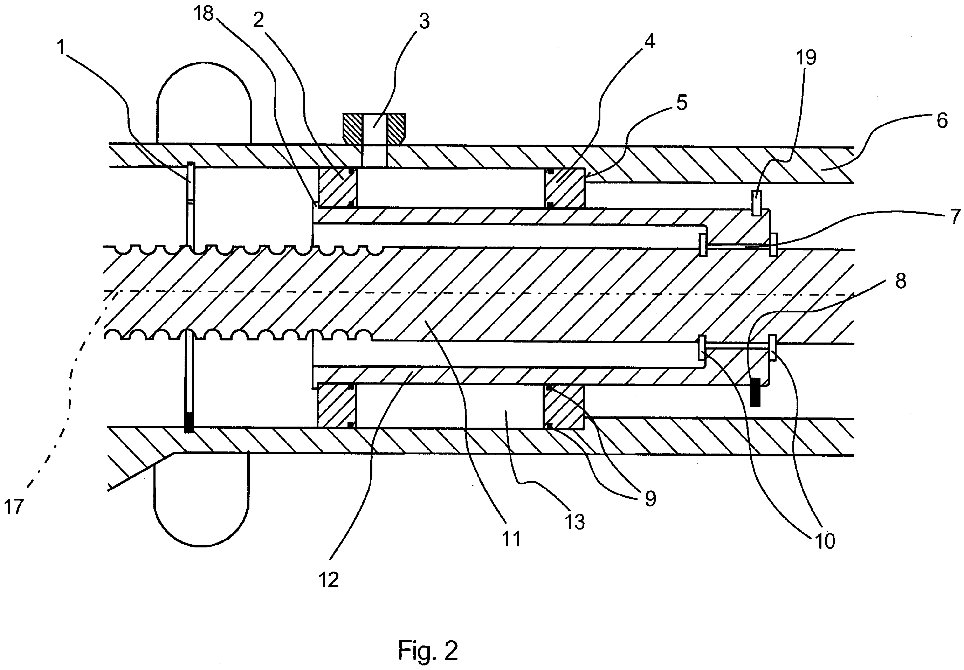

Fig. 2 zeigt eine zweite Situation des Lenksystems der Fig. 1, bei der die Räder nicht mehr in Geradeausrichtung ausgerichtet sind. Die Zahnstange 11 ist nach rechts (gemäß Fig. 2) verschoben, wodurch der Mitnehmer 12 aufgrund der Sicherungsringe 10 ebenfalls nach rechts (gemäß Fig. 2) verschoben ist. Der Kolben 2 liegt an dem Anschlag 18 an, daher wird der Kolben 2 bei einer Bewegung des Mitnehmers 12 nach rechts auch nach rechts (jeweils gemäß Fig. 2) bewegt. Fällt die Lenkkraft auf die Zahnstange 11 weg, kann durch den Zylinder 13 eine Rückstellung der Zahnstange 11 erfolgen. Das Lenksystem weist einen Anschluss 3 auf. Hierdurch ist es möglich einen konstanten Druck/Überdruck in dem Zylinder 13 aufrecht zuhalten. Vorteilhafterweise ergibt sich durch einen konstanten Druck im Zylinder 13 unabhängig von der Weite der Auslenkung der Zahnstange 11 eine konstante Rückstellkraft. Der Anschluss 3 könnte auch als Überdruckventil ausgebildet sein, um einen zu hohen Überdruck in dem Zylinder 13 zu verhindern. Es könnten ferner auch mehrere Anschlüsse 3 an dem Zylinder 13 angeordnet werden, um verschiedene Funktionen erfüllen zu können. Wird die Zahnstange 11 nach links (gemäß Fig. 2) ausgelenkt/verschoben, so liegt der Kolben 4 an dem Anschlag 19 an und wird durch den Mitnehmer 12 nach links (gemäß Fig. 2) verschoben. Da der Kolben 2 am Anschlag 1 anliegt, bleibt er bei dieser Bewegung ortsfest. Hierdurch kann durch denselben Zylinder 13 eine Rückstellkraft in entgegen gesetzter Richtung erzeugt werden. Erfindungsgemäß kann daher durch nur einen Zylinder 13 Rückstellkräfte in beide axiale Verfahrrichtungen der Zahnstange 11 hervorgerufen werden, wodurch sich eine kompakte Bauweise des Lenksystems mit selbsttätiger Rückstellung ergibt. Der Mitnehmer 12 ist mit der Zahnstange 11 durch Sicherungsringe 10 verbunden, wodurch selbst bei großer Durchbiegung der Zahnstange 11 der Mitnehmer 12 und/oder die Kolben 2, 4 nicht klemmen, da zwischen Mitnehmer 12 und Zahnstange 11 ein radialer Abstand 7 vorgesehen werden kann.

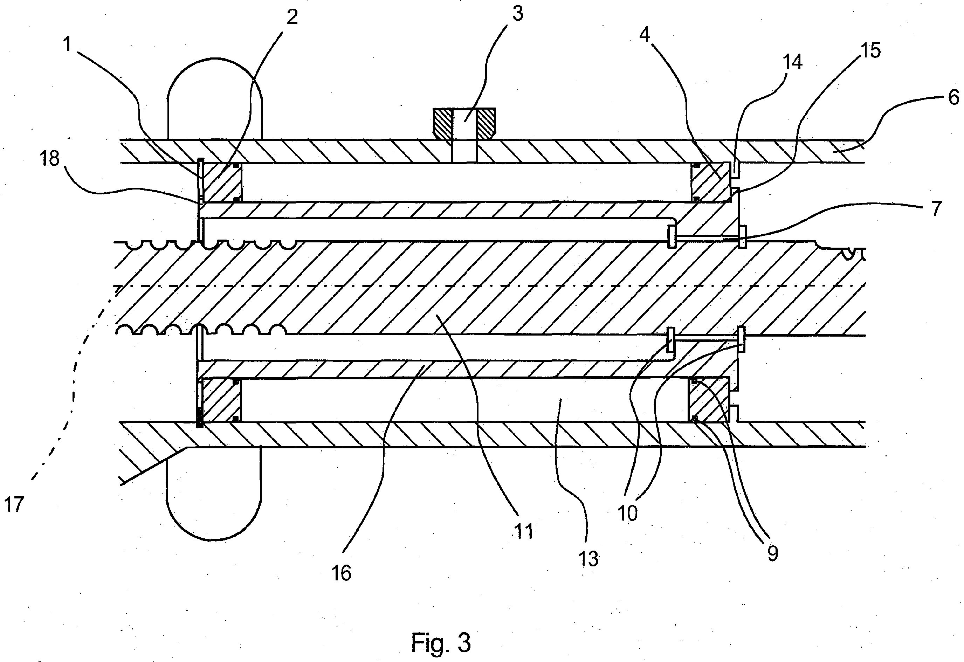

Fig. 3 zeigt eine weitere Ausführungsform eines Lenksystems mit Anschlägen 15, 18, die an dem Mitnehmer 16 ausgebildet sind, um jeweils einen Kolben 2, 4 bei einer Auslenkung der Zahnstange 11 aus deren Mittelstellung bewegen zu können. Die Fig. 3 zeigt die Zahnstange 11 in einer Mittelstellung bei der die Räder in Geradeausrichtung ausgerichtet sein sollten.

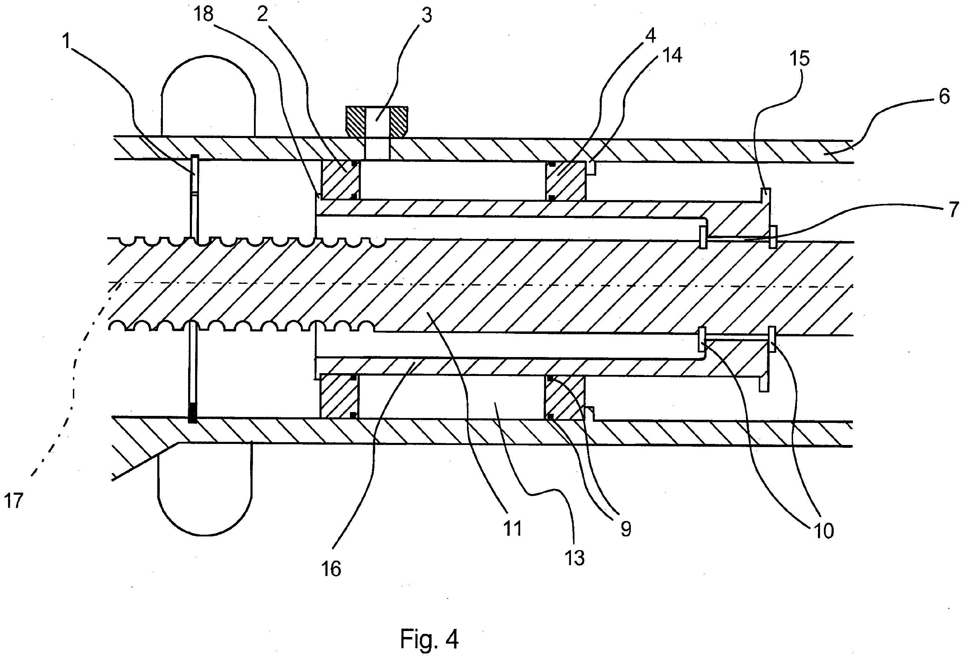

Fig. 4 zeigt das Lenksystem bei der die Zahnstange 11 nach rechts (gemäß Fig. 4) ausgelenkt ist. In dieser Situation ist der Kolben 4 ortsfest, da er an dem Anschlag 14 anliegt und der Kolben 2 wird durch den Anschlag 18 des Mitnehmers 16 nach rechts (gemäß Fig. 4) verschoben. Bei Wegfall der Auslenkungskraft auf die Zahnstange 11 kann durch den Zylinder 13 eine Rückstellkraft erzeugt werden. Wird die Zahnstange 11 nach links (gemäß Fig. 4) bewegt, so liegt der Kolben 2 an dem Anschlag 1 an und der Kolben 4 wird durch den Anschlag 15 des Mitnehmers 16 nach links (gemäß Fig. 4) entlang der axialen Längslinie/Längsachse 17 der Zahnstange 11 ausgelenkt. Durch den Zylinder 13 kann wieder eine Rückstellkraft erzeugt werden, die entgegen der vorherigen Auslenkung der Zahnstange 11 gerichtet ist.

Über den Anschluss/Luftanschlussstutzen 3 kann dem Zylinder 13 eine geregelte Druckluft mit konstantem Druck/Überdruck zugeführt werden bzw. eine hydraulische Flüssigkeit. Durch einen konstanten Druck einer Druckluft innerhalb des Zylinders 13 kann eine Rückstellkraft erzeugt werden, die unabhängig von der Weite der Auslenkung der Zahnstange 11 ist. Auch bei sehr kleiner Auslenkung der Zahnstange 11 wirkt dann die konstante Rückstellkraft auf die Zahnstange 11. Damit ist sicher gestellt, dass eine exakte Rückstellung ohne einen Nullpunktfehler/Offsetfehler erfolgen kann.

Der Druck innerhalb des Zylinders 13 kann auch variiert werden, beispielsweise je nach Beladungszustand des betreffenden Fahrzeugs. Bei hohem Gesamtgewicht des Fahrzeugs ist eine geringere Rückstellkraft durch den Zylinder 13 erforderlich als bei niedrigerem Gesamtgewicht des Zylinders 13. Durch die Variation des Drucks im Zylinder 13 kann die jeweils wirkende Rückstellkraft entsprechend eingestellt werden.

Außerdem kann der Druck im Zylinder 13 variiert werden, um die Rückstellkraft anzupassen bzw. zu erhöhen, um eine schnelle Rückstellung, eine während eines Rückstellvorgangs zunächst schnelle Rückstellung und/oder eine gleichmäßige Rückstellung oder eine stets konstante Rückstellkraft sicher zu stellen. Mittels des Anschlusses 3 kann auch eine Überwachung des Druckes im Zylinder 13 erfolgen. Hierdurch kann eine Überprüfung der Funktionsfähigkeit der Rückstellung vorgenommen werden, auch solange eine Rückstellung nicht benötigt wird, da die Lenkunterstützung einwandfrei arbeitet. Hierdurch kann daher ein schlafender Fehler der Rückstelleinheit bzw. des Zylinders 13 festgestellt werden.

Die Anschläge 1, 5, 8, 10, 14, 15, 18 und/oder 19, können jeweils durch ein zusätzliches Bauteil oder durch Umformung oder Absetzen beim Drehen eines vorhandenen Bauteils erhalten werden. Die Anschläge 14, 15 und/oder 18 können durch Umbördeln, durch Umformen oder durch Stauchen des Mitnehmers 12, 16 oder durch Drehen und Absetzen erhalten werden.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Gehäuse-Sicherungsring/Anschlag
- 2: Kolben
- 3: Anschluss/Luftanschlussstutzen
- 4: Kolben
- 5: Anschlag
- 6: Lenkungsgehäuse
- 7: radialer Abstand
- 8: Führungshülse/Sicherungsring/Anschlag
- 9: Kolbendichtung
- 10: Sicherungsringe
- 11: Zahnstange
- 12: Mitnehmer
- 13: Zylinder
- 14: Anschlag
- 15: Anschlag
- 16: Mitnehmer
- 17: Längsachse der Zahnstange
- 18: Anschlag
- 19: Anschlag

## Patentansprüche

1. Lenksystem für ein Fahrzeug umfassend:
einen Elektromotor zur Lenkunterstützung,
ein Lenkungsgehäuse (6) zur Aufnahme eines Teils des Lenksystems,
ein Element, das eine Zahnstange oder Kolbenstange ist, zum Führen einer Spurstange mit einer Längsachse (17) und
einen Mitnehmer (12, 16), der mit dem Element verbunden ist,
**dadurch gekennzeichnet, dass** zwischen dem Lenkungsgehäuse (6) und dem Mitnehmer (12, 16) ein pneumatischer und/oder hydraulischer Zylinder (13) zur Erzeugung einer Rückstellkraft für das Element angeordnet ist.

2. Lenksystem nach Anspruch 1, **dadurch gekennzeichnet, dass** ein Teil einer Innenwand des Lenkungsgehäuses (6) und ein Teil einer Außenwand des Mitnehmers (12, 16) eine erste und eine zweite Wand des Zylinders (13) ausbilden.

3. Lenksystem nach einem der Ansprüche 1 oder 2, **dadurch gekennzeichnet, dass** das Lenksystem einen ersten Kolben (2) und einen zweiten Kolben (4) aufweist, die eine dritte und eine vierte Wand des Zylinders (13) ausbilden, wobei der erste Kolben (2) und/oder der zweite Kolben (4) in Richtung der Längsachse (17) in zumindest einer ersten und/oder einer zweiten Richtung beweglich sind.

4. Lenksystem nach einem der vorhergehenden Ansprüche, **dadurch gekennzeichnet, dass** bei einer Bewegung des Elements in die erste Richtung der Längsachse (17) der Mitnehmer (12, 16) in die erste Richtung bewegt wird und wobei bei einer Bewegung des Elements in die entgegen gesetzte Richtung zur ersten Richtung der Mitnehmer (12, 16) auch in die entgegen gesetzte Richtung bewegt wird.

5. Lenksystem nach einem der vorhergehenden Ansprüche, **dadurch gekennzeichnet, dass** bei einer Bewegung des Mitnehmers (12, 16) in die erste Richtung der erste Kolben (2) in die erste Richtung bewegt wird und der zweite Kolben (4) ortsfest ist und wobei bei einer Bewegung des Mitnehmers (12, 16) in die entgegen gesetzte Richtung der zweite Kolben (4) in die entgegen gesetzte Richtung bewegt wird und der erste Kolben (2) ortsfest ist.

6. Lenksystem nach einem der vorhergehenden Ansprüche, **dadurch gekennzeichnet, dass** der Mitnehmer (12, 16) durch zwei Sicherungsringe (10) mit dem Element verbunden ist.

7. Lenksystem nach einem der vorhergehenden Anspruche, **dadurch gekennzeichnet, dass** der Zylinder (13) innerhalb des Lenkungsgehäuses (6) angeordnet ist.

8. Lenksystem nach einem der vorhergehenden Ansprüche, **dadurch gekennzeichnet, dass** das Element durch ein erstes und ein zweites Lager gelagert ist und wobei der Zylinder (13) zwischen dem ersten und dem zweiten Lager angeordnet ist.

## Claims

1. Steering system for a vehicle, comprising:
an electric motor for steering assistance,
a steering arrangement housing (6) for accommodating a part of the steering system,
an element, which is a toothed rack or piston rod,
for controlling a track rod, having a longitudinal axis (17), and
a driver (12, 16) that is connected to the element,
**characterized in that**
a pneumatic and/or hydraulic cylinder (13) for generating a restoring force for the element is arranged between the steering arrangement housing (6) and the driver (12, 16).

2. Steering system according to Claim 1, **characterized in that** a part of an inner wall of the steering arrangement housing (6) and a part of an outer wall of the driver (12, 16) form a first and a second wall of the cylinder (13).

3. Steering system according to either of Claims 1 and 2, **characterized in that** the steering system has a first piston (2) and a second piston (4) which form a third and a fourth wall of the cylinder (13), wherein the first piston (2) and/or the second piston (4) are movable in at least a first and/or a second direction in the direction of the longitudinal axis (17).

4. Steering system according to one of the preceding claims, **characterized in that**, during a movement of the element in the first direction of the longitudinal axis (17), the driver (12, 16) is moved in the first direction, and wherein, during a movement of the element in the opposite direction to the first direction, the driver (12, 16) is also moved in the opposite direction.

5. Steering system according to one of the preceding claims, **characterized in that**, during a movement of the driver (12, 16) in the first direction, the first piston (2) is moved in the first direction and the second piston (4) is positionally fixed, and wherein, during a movement of the driver (12, 16) in the opposite direction, the second piston (4) is moved in the opposite direction and the first piston (2) is positionally fixed.

6. Steering system according to one of the preceding claims, **characterized in that** the driver (12, 16) is connected to the element by means of two securing rings (10).

7. Steering system according to one of the preceding claims, **characterized in that** the cylinder (13) is arranged within the steering arrangement housing (6).

8. Steering system according to one of the preceding claims, **characterized in that** the element is mounted by means of a first and a second bearing, and wherein the cylinder (13) is arranged between the first and the second bearing.

## Revendications

1. Système de direction pour un véhicule, comprenant
un moteur électrique pour une assistance à la direction,
un boîtier de direction (6) pour recevoir une partie du système de direction,
un élément qui est une crémaillère ou une tige de piston, pour guider une barre d'accouplement avec un axe longitudinal (17) et
un dispositif d'entraînement (12, 16) qui est connecté à l'élément,
**caractérisé en ce**
**qu'**un cylindre pneumatique et/ou hydraulique (13) est disposé entre le boîtier de direction (6) et le dispositif d'entraînement (12, 16) pour générer une force de rappel pour l'élément.

2. Système de direction selon la revendication 1, **caractérisé en ce qu'**une partie d'une paroi intérieure du boîtier de direction (6) et une partie d'une paroi extérieure du dispositif d'entraînement (12, 16) constituent une première et une deuxième paroi du cylindre (13).

3. Système de direction selon l'une quelconque des revendications 1 ou 2, **caractérisé en ce que** le système de direction présente un premier piston (2) et un deuxième piston (4) qui constituent une troisième et une quatrième paroi du cylindre (13), le premier piston (2) et/ou le deuxième piston (4) pouvant être déplacés dans la direction de l'axe longitudinal (17) dans au moins une première et/ou une deuxième direction.

4. Système de direction selon l'une quelconque des revendications précédentes, **caractérisé en ce que** dans le cas d'un déplacement de l'élément dans la première direction, l'axe longitudinal (17) du dispositif d'entraînement (12, 16) est déplacé dans la première direction, et dans le cas d'un déplacement de l'élément dans la direction opposée à la première direction, le dispositif d'entraînement (12, 16) est également déplacé dans la direction opposée.

5. Système de direction selon l'une quelconque des revendications précédentes, **caractérisé en ce que** dans le cas d'un déplacement du dispositif d'entraînement (12, 16) dans la première direction, le premier piston (2) est déplacé dans la première direction et le deuxième piston (4) est fixe et dans le cas d'un déplacement du dispositif d'entraînement (12, 16) dans la direction opposée, le deuxième piston (4) est déplacé dans la direction opposée et le premier piston (2) est fixe.

6. Système de direction selon l'une quelconque des revendications précédentes, **caractérisé en ce que** le dispositif d'entraînement (12, 16) est connecté par deux bagues de fixation (10) à l'élément.

7. Système de direction selon l'une quelconque des revendications précédentes, **caractérisé en ce que** le cylindre (13) est disposé à l'intérieur du boîtier de direction (6).

8. Système de direction selon l'une quelconque des revendications précédentes, **caractérisé en ce que** l'élément est supporté par un premier et un deuxième palier et dans lequel le cylindre (13) est disposé entre le premier et le deuxième palier.
